# EUROPEAN PATENT APPLICATION

(11) **EP 4 508 965 A1**
(43) Date of publication of application: **19.02.2025**
(21) Application number: 23192268.3
(22) Date of filing: 18.08.2023
(51) Int. Cl.: A01C 11/02, A01G 9/08

(54) **A LIVING PLANT FEEDING MODULE, KIT AND SYSTEM FOR AUTOMATICALLY PROVIDING LIVING PLANTS FOR PLANTING**

(30) Priority: 17.08.2023 PT 2023118870
(71) Applicant: Fravizel - Equipamentos Metalomecânicos, S.A., 2025-999 Alcanede (PT)
(72) Inventor: VICENTE FRAZÃO, ELISEU MANUEL, ALCANEDE (PT)
(74) Representative: do Nascimento Gomes, Rui

(57) **Abstract**

The present disclosure includes the automatic planting of living plants, in particular means for automatically providing or dispensing living plants provided in trays. Such feeding means feed planting means which automatically plant the living plants. The present disclosure comprises, a living plant feeding module for automatically providing living plants for planting, the module comprising i) a platform in which one or more trays containing living plants are providable, ii) a tray inlet, iii) a tray outlet, iv) tray discharge driving means configured to move the trays along the platform from the inlet to the outlet, defining a tray discharge movement and direction, and v) tray storage driving means configured to, once a tray has been discharged from the contained living plants at the tray outlet, move it along a storage direction with a component substantially perpendicular to the platform and the tray discharge movement, defining a storage movement and direction.

## Description

### AREA OF THE DISCLOSURE

The present disclosure refers to the automatic planting of living plants, in particular means for automatically providing or dispensing living plants provided in trays. Such feeding means feed planting means which then automatically plant the living plants in the soil. The planting means may be associated with moving structures, such as carts - movable by resort of an associatable vehicle - or vehicles, which provide the automatic planting of living plants provided in such moving structures or assemblies.

### PRIOR ART

One of the most common solutions to provide a certain automation in the planting of living plants is track planters, which include an excavator. This sort of equipment has an area in which a tray with living plants is provided, such living plants being sequentially placed on a planting module for subsequent planting.

A platform may be provided to place the tray, and living plants such as saplings are removed from their tray by transfer means and provided on planting means for further planting.

These solutions are considerably inefFicient, as they are limited to the number of plants providable in a single tray, in turn provided on a platform. Transfer means pick the plants from the tray to the planting means, leading to a high time consumption.

The present solution allows to improve the living plant transfer and tray storage procedures, thereby having a significantly higher efficiency when compared to prior art solutions, enabling to reach numbers of at least 400 planted trees per hour, without recharging trays.

### SUMMARY OF THE DISCLOSURE

The present disclosure comprises, in a first aspect, a living plant feeding module for automatically providing living plants for planting, the module comprising i) a platform in which one or more trays containing living plants are providable, ii) a tray inlet, iii) a tray outlet, iv) tray discharge driving means configured to move the said one or more trays along the platform from the tray inlet to the tray outlet, such movement defining a tray discharge movement and direction, and v) tray storage driving means configured to, once a tray has been discharged from the contained living plants at the tray outlet, move the respective tray along a storage direction which at least has a component substantially perpendicular to the platform, optionally the storage direction being perpendicular, and the tray discharge movement, defining a storage movement and direction.

The tray storage driving means may be further configured to move one or more trays towards the tray outlet, in an inverse storage movement, and the tray discharge driving means are further configured to move trays from the tray outlet towards the tray inlet, in an inverse tray discharge movement, thereby discharging empty trays from the module.

The module may further comprise tray engaging means, the tray engaging means engaging with a tray in one or more points and engaging with the tray discharge driving means and the tray storage driving means, such that a tray is driven through the platform and the storage direction by engaging with the tray engaging means which, in turn, are driven and thus moved by the tray discharge driving means and the tray storage driving means.

The tray discharge driving means may comprise two tray discharge drive chains laterally provided in relation to the platform.

The tray discharge driving means may comprise two tray storage drive chains, each being aligned with one of the tray discharge drive chains.

The aligned tray discharge drive chains and tray storage drive chains may be moved by means of a same driving axle.

The tray engaging means may be configured to, when provided on the platform, extend from one of the tray discharge drive chains to the other of the tray discharge drive chains, the tray engaging means comprising two lateral projections, each of which engaging in one of the tray discharge drive chains, such that movement is transmitted from a tray discharge drive chain to the tray engaging means.

The tray engaging means may comprise two lateral frontal projections, each of which engaging in one of the tray storage drive chains, such that movement is transmitted from a tray storage drive chain to the tray engaging means.

The outlet may consist of an open section provided after the platform in the discharge movement, wherein a living plant provided in a tray with a bottom opening falls through the open section.

In a second aspect, the present disclosure comprises a living plant feeding kit for automatically providing living plants for planting comprising the module of the present disclosure and one or more trays, wherein one or more trays are provided on the platform.

The kit may comprise an even number of trays, each two trays being provided side by side on the platform. The kit may comprise 2.n trays, n being equal to 1, 2, 3, 4, 5, or 6. Each tray may have *l.m* individual cups, each cup being suitable to contain a living plant, *l* corresponding to a column of cups provided in the tray, on the platform and along the tray discharge direction of movement and being equal to 1, 2, 3, 4, 5, 6 and/or m corresponding to a line of cups provided in the tray, on the platform and along a direction perpendicular the tray discharge direction of movement and being equal to 5, 6, 7, 8, 9, 10, 11, 12, 14, 15, 16, 17, 18, 19 or 20. Each tray may specifically have 5x10 individual trays.

In a third aspect, the present disclosure comprises a living plant feeding system for automatically providing living plants for planting, the system comprising the module of the present disclosure or the kit of the present disclosure
and a buffer module, wherein living plants provided on the outlet of the module are moved to the buffer module,
the buffer module comprising a closed circuit with a discharge hole, the closed circuit being configured such that a plurality of lined individual cups are providable in such closed circuit, each cup being suitable for containing a living plant,
wherein the closed circuit is further configured such that lined individual cups are sequentially moved along the circuit and, thus, a living plant provided in a cup with a bottom opening falls through the hole in the closed circuit.

The closed circuit may comprise two substantially parallel straight sections and two curved sections, having a substantially elliptical shape, thereby being suitable for rounded cups. The hole may be provided substantially in the middle of a straight section.

In a fourth aspect, the present disclosure comprises a movable assembly for automatically planting a living plant, the movable assembly comprising i) a body, ii) base moving means coupled to the body and movable along a tray discharge direction of movement substantially parallel to soil provided below the movable assembly and iii) a planting module, the planting module being adapted to contain a living plant and being coupled to the body,
the movable assembly further comprising the plant feeding module of the present disclosure or the living plant feeding kit of the present disclosure or the living plant feeding system of any of the present disclosure, the living plant feeding module, kit or system being arranged to automatically provide living plants into the planting module, for subsequent planting.

In a fifth aspect, the present disclosure comprises a method for operating a living plant feeding module for automatically providing living plants for planting, the method comprising the steps of:
moving one or more trays containing living plants along a platform and from an inlet to an outlet, along a tray discharge direction,
discharging living plants from the tray through an outlet, optionally the outlet consisting of an open section and the tray having open bottoms below the living plants,
moving the one or more trays along a storage direction which at least has a component substantially perpendicular to the platform, optionally the storage direction being perpendicular, and the tray discharge movement, defining a storage movement.

The method may be implemented by the module of the present disclosure.

### DESCRIPTION OF THE FIGURES

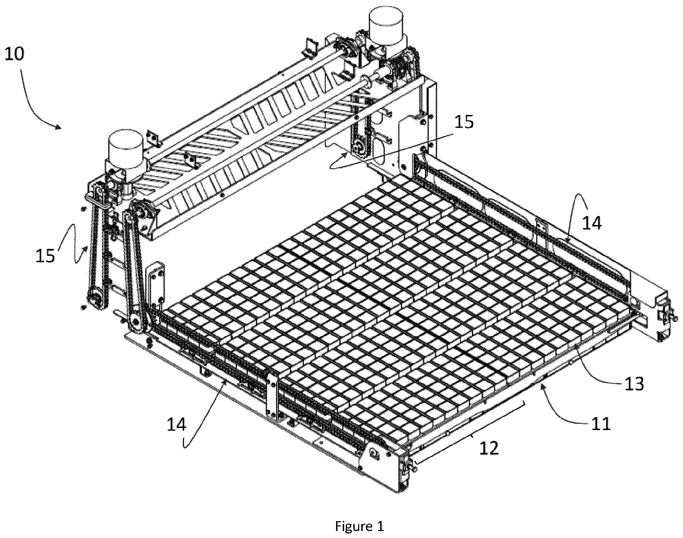

Figure 1 - a cross-section side view of a feeding module (10) according to the present disclosure, comprising the platform (11), in which several trays containing living plants (20) are provided, the tray inlet, the tray outlet, the tray discharge driving means (14) which consist of tray discharge drive chains (one is shown) and tray storage driving means (15) which consist of tray storage drive chains (one is shown). The shown tray storage drive chain is driven by a same axle as the tray discharge drive chain.

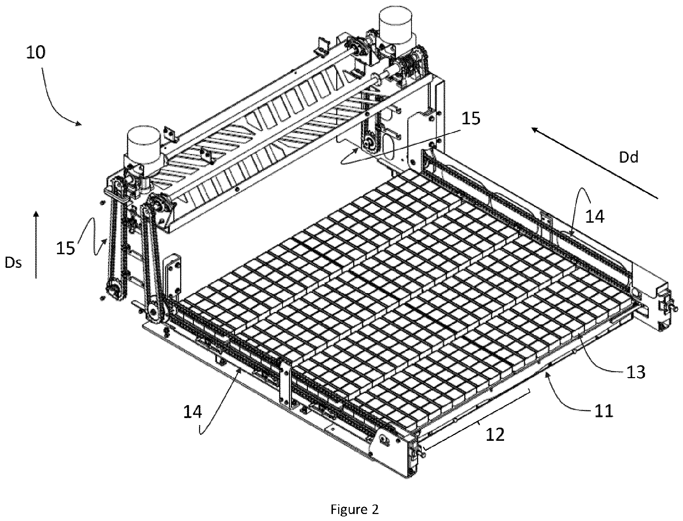

Figure 2 - the same view and embodiment of Figure 1, in which the direction of discharge (Dd) is represented, as well as the direction of storage (Ds). In this case, the direction of storage (Ds) is perpendicular to the platform (11) and the direction of discharge (Dd).

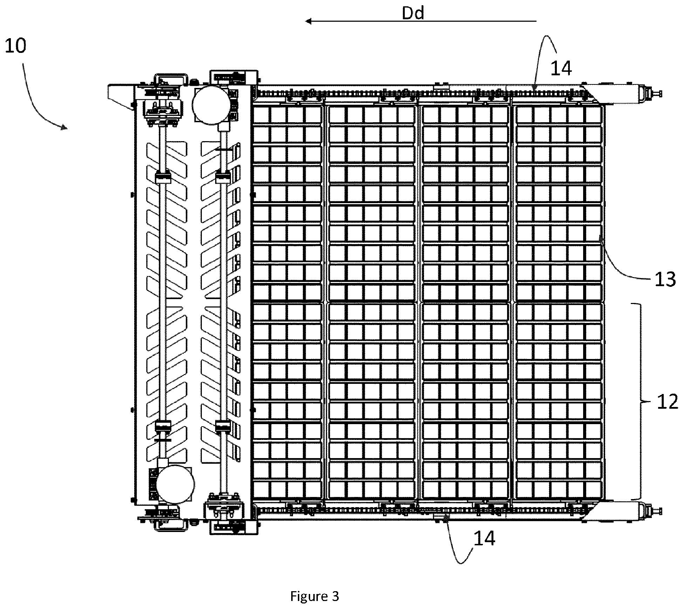

Figure 3 - Top view of the embodiment of Figure 1. Several groups of trays (12) provided on the platform (11) are represented (without plants, thus after complete unloading/discharge of trays (12). The trays (12) occupy the whole space of the platform (11), horizontally [perpendicular to the direction of discharge (Dd)] and longitudinally [parallel to the direction of discharge (Dd)]. There are four groups of trays (12) provided longitudinally along the platform (11). Each tray (12) has 5 lines. Each group of trays (12) is formed by two trays (12) provided side by side, horizontally. Each tray (12) has 10 columns. Thus, each tray (12) has 50 individual cups (13).

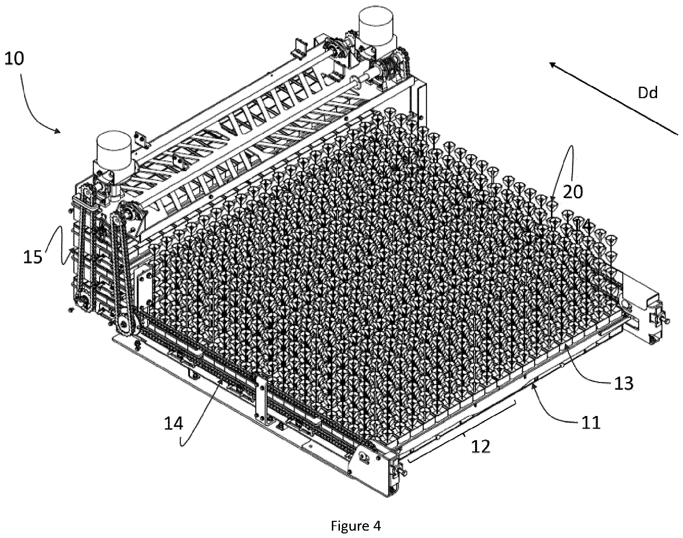

Figure 4 - perspective view of the embodiment of Figures 1 and 3. Several groups of trays (12) provided on the platform (11) are represented [with plants (20), thus before starting the unloading/discharge]. There are four groups of trays (12) provided longitudinally along the platform (11), each with 5 lines and 10 columns, as in the case of Figure 3. Moreover, and merely for a representation completeness, empty trays (12) are provided in storage. Such does not consist of a real case since, otherwise, loaded trays (12) would not be able to be discharged/unloaded, as the stored trays (12) are impeding more trays (12) to move towards the open section of the outlet.

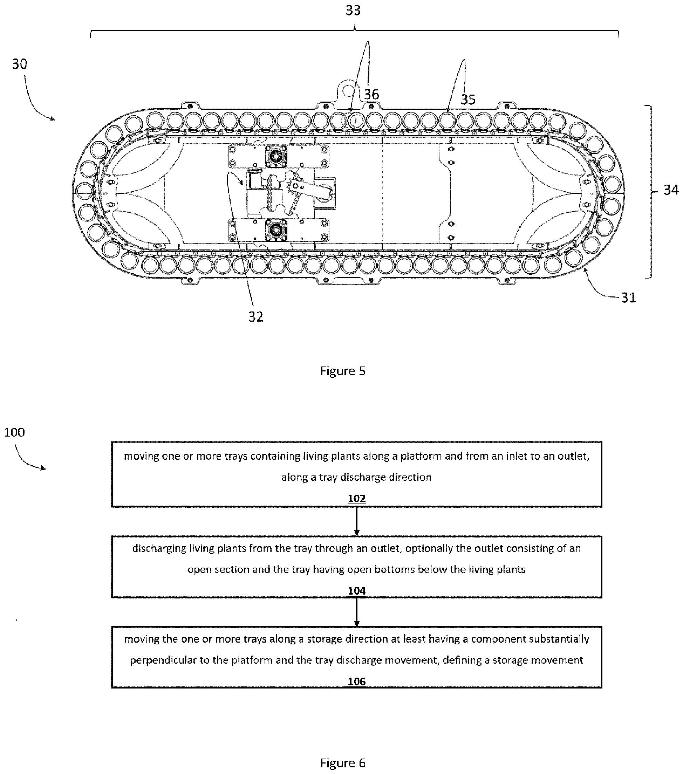

Figure 5 - top view of a buffer module (30) to the present disclosure, part of the system of the present disclosure. The closed circuit (31) is represented, as well as driving means (32) of such closed circuit (31). The circuit has two straight sections (33) and two rounded sections (34). In each of the straight sections (33), 20 cups (35) are provided. The cups (35) with a cross represent cups (35) with living plants (20) provided inside. Since cups (35) have an open bottom, living plants (20) remain inside the cup (35) until reaching the discharge hole (36), from which the living plant (20) falls onto a planting module. The subsequent cups (35) are, then empty. Such buffer module (30) is associatable with the feeding module (10) of Figures 1-4. In such case, a further line of 20 living plants (20) from two trays (12) may then fall onto the straight section which does not have the discharge hole (36) (section seen below).
Figure 6 - a flowchart representation of a method (100) according to the present disclosure, including the steps of moving the movable assembly along a direction of movement substantially parallel to soil provided below the movable assembly, together with a planting module (102), providing a plant in a planting module (104), lowering the planting module until providing it within the soil and allowing the planting module to move freely along the direction of movement (106), raising the planting module at least until removing it from the soil and again making it solidary with the movable assembly along the direction of movement (108), and moving the planting module in relation to the body and the base moving means along the direction of movement (110).

### DETAILED DESCRIPTION

The present disclosure comprises a living plant feeding module for automatically providing living plants for planting.

The module comprises i) a platform in which one or more trays containing living plants are providable, ii) a tray inlet, iii) a tray outlet, iv) tray discharge driving means and v) tray storage driving means.

The tray discharge driving means move the one or more trays along the platform, from the tray inlet towards the tray outlet. Trays may have an open bottom and, thus, living plants provided therein do not fall as they are supported by the platform. When reaching an outlet consisting of an open section, living plants provided inside the bottomless trays fall, wherein gravity is used to transfer the living plants from the platform towards a buffer module (as described below) or a planting module.

When associated with a buffer module (as described below), a living plant feeding module may be lowered and raised such that, when in the raised position, living plants provided in the buffer module do not contact vertically the feeding module.

Once a tray has been discharged from the contained living plants at the tray outlet, the tray storage driving means move the respective tray along a storage direction which at least has a component substantially perpendicular to the platform and the tray discharge movement, defining a storage movement and direction. This storage direction may be perpendicular to the platform and the tray discharge movement. In such case, trays are moved directly up, leaving the space for a new, living plant loaded, tray to be driven to the outlet, and saving space, having a compact construction. The storage direction may also be up and front or rear, as long as it leaves space for a new, living plant loaded, tray to be driven to the outlet.

When using several trays, they end substantially stacked, as the first tray to have been discharged or unloaded is in the highest position, and the last tray to have been discharged or unloaded is in the lowest position.

The tray storage driving means may be further configured to move one or more trays towards the tray outlet, in an inverse storage movement. Seemingly, the tray discharge driving means may be further configured to move trays from the tray outlet towards the tray inlet, in an inverse tray discharge movement, thereby discharging empty trays from the module.

When discharging living plants from the feeding module to a buffer module (as described below) or a planting module, trays are moved along the platform from the inlet to the outlet and then up (or up and front or rear, as above described).

After all trays have been discharged and are empty of living plants, then the inverse movement may be performed. The last tray to have been discharged will be moved down (or down and front or down and rear) back to the outlet by means of the tray storage driving means and from the outlet back to the inlet by means of the tray discharge driving means.

When using several trays, they are substantially stacked while in storage, as the first tray to have been discharged or unloaded is in the highest position, and the last tray to have been discharged or unloaded is in the lowest position. Thus, trays will again be driven towards the inlet. The last tray to have been discharged or unloaded will be the closest to the inlet. The remaining trays will be provided along the platform. The first tray to have been discharged or unloaded will be the closest to the outlet. If trays are removed from the platform, e.g., if the last tray to have been unloaded is removed from the platform, then other trays may be moved closer to the inlet.

The module may further comprise tray engaging means. As the tray engaging means engage with a tray in one or more points and engage with the tray discharge driving means and the tray storage driving means, a tray is continuously driven through the platform and then to the storage direction.

The aligned tray discharge drive chains and tray storage drive chains may be moved by means of a same driving axle, thereby providing simplicity of construction while guaranteeing a synchronicity of movement between driving chains.

The tray engaging means may be configured to, when provided on the platform, extend from one of the tray discharge drive chains to the other of the tray discharge drive chains, the tray engaging means comprising two lateral projections, each of which engaging in one of the tray discharge drive chains, such that movement is transmitted from a tray discharge drive chain to the tray engaging means.

The tray engaging means may consist of several bars with the referred extensions and projections, each of which engaging with one or more trays. In order to engage with more than one tray, these several trays have to be provided side by side, along a direction perpendicular to the tray discharge direction and parallel to the platform.

The tray engaging means may comprise two lateral frontal projections, each of which engaging in one of the tray storage drive chains, such that movement is transmitted from a tray storage drive chain to the tray engaging means. These projections guarantee engagement with the drive chains.

The tray engaging means may further comprise tray engaging projections provided along the direction perpendicular to the tray discharge direction and parallel to the platform. In such case, the trays may comprise a plurality of cups, cups provided side by side along a line of the tray, which is perpendicular to the tray discharge direction and parallel to the platform, being separated by a space in which the tray engaging projections engage.

The outlet may consist of an open section provided after the platform in the discharge movement, wherein a living plant provided in a tray with a bottom opening falls through the open section.

With regard to trays, they may be provided in the kit in an even or odd number.

When comprising an even number of trays, each two trays may be provided side by side on the platform.

The kit may comprise 2.n trays, n being equal to 1, 2, 3, 4, 5, or 6. Each tray may have *l.m* individual cups, each cup being suitable to contain a living plant, *l* corresponding to a column of cups provided in the tray, on the platform and along the tray discharge direction of movement and being equal to 1, 2, 3, 4, 5, 6 and/or m corresponding to a line of cups provided in the tray, on the platform and along a direction perpendicular the tray discharge direction of movement and being equal to 5, 6, 7, 8, 9, 10, 11, 12, 14, 15, 16, 17, 18, 19 or 20.

Each tray may specifically have 5x10 individual trays.

In a third aspect, the present disclosure comprises a living plant feeding system for automatically providing living plants for planting, the system comprising the module of the present disclosure or the kit of the present disclosure
and a buffer module, wherein living plants provided on the outlet of the module are moved to the buffer module,
the buffer module comprising a closed circuit with a discharge hole, the closed circuit being configured such that a plurality of lined individual cups are providable in such closed circuit, each cup being suitable for containing a living plant,
wherein the closed circuit is further configured such that lined individual cups are sequentially moved along the circuit and, thus, a living plant provided in a cup with a bottom opening falls through the hole in the closed circuit.

The system acts, by containing the buffer module, as a buffer. This way, living plants may be provided in a bulky manner in trays in the feeding module and the buffer allows to have them lined for individual transfer to the planting module.

Figure 5 shows an implementation of the buffer module. Cups are moved along the circuit. Before reaching the hole, cups contain living plants. As the cups have an open bottom, when reaching the hole, the living plant provided in the cup falls through it, towards a planting module. thus, after the hole, cups are empty. Then, living plants are again transferred from the feeding module into the empty cups, which again are moving towards the hole. The direction of movement may thus be kept without reversal.

The closed circuit may comprise two substantially parallel straight sections and two curved sections, having a substantially elliptical shape, thereby being suitable for rounded cups. The hole may be provided substantially in the middle of one of the straight sections. The other straight section is, then, the section in which living plants are transferred from the feeding module to the empty cups.

In a fourth aspect, the present disclosure comprises a movable assembly for automatically planting a living plant, the movable assembly comprising i) a body, ii) base moving means coupled to the body and movable along a tray discharge direction of movement substantially parallel to soil provided below the movable assembly and iii) a planting module, the planting module being adapted to contain a living plant and being coupled to the body,
the movable assembly further comprising the plant feeding module of the present disclosure or the living plant feeding kit of the present disclosure or the living plant feeding system of any of the present disclosure, the living plant feeding module, kit or system being arranged to automatically provide living plants into the planting module, for subsequent planting.

The planting module may be movable between a planting position in which the planting module is inserted into the soil to therein plant a living plant and a recharge position in which the planting module is provided away and thereby above the soil, and
when in the planting position, the planting module is releasable to freely move along the direction of movement while the base moving means are maintained in movement together with the body, and thereby the whole movable assembly along the direction of movement,
and, the movable assembly further comprises secondary moving means coupled to the body and which actively move the planting module when not in the planting position, moving the planting module in relation to the body and the base moving means, along the direction of movement.

Such assembly provides a continuous loading of plants from the feeding module to the planting module or from the feeding module to the buffer module and then to the planting module, the moving assembly maintaining a constant velocity. The moving assembly is particularly suitable for automatically planting living plants in the field, namely to plant a plurality of trees along a planting line, allowing to plant a forest at a rate much higher than those of prior art solutions, by maintaining a constant velocity.

The living plant may consist of a tree, in particular a small tree, a sapling.

As will be clear to one skilled in the art, the present disclosure should not be limited to the embodiments described herein, and a number of changes are possible which remain within the terms of the present disclosure.

Of course, the preferred embodiments shown above are combinable, in the different possible forms, being herein avoided the repetition all such combinations.

## Claims

1. A living plant feeding module for automatically providing living plants for planting, the module comprising i) a platform in which one or more trays containing living plants are providable, ii) a tray inlet, iii) a tray outlet, iv) tray discharge driving means configured to move the said one or more trays along the platform from the tray inlet to the tray outlet, such movement defining a tray discharge movement and direction, and v) tray storage driving means configured to, once a tray has been discharged from the contained living plants at the tray outlet, move the respective tray along a storage direction which at least has a component substantially perpendicular to the platform, optionally the storage direction being perpendicular, and the tray discharge movement, defining a storage movement and direction.

2. A module according to the previous claim wherein the tray storage driving means are further configured to move one or more trays towards the tray outlet, in an inverse storage movement, and the tray discharge driving means are further configured to move trays from the tray outlet towards the tray inlet, in an inverse tray discharge movement, thereby discharging empty trays from the module.

3. A module according to any of the preceding claims wherein it comprises tray engaging means, the tray engaging means engaging with a tray in one or more points and engaging with the tray discharge driving means and the tray storage driving means, such that a tray is driven through the platform and the storage direction by engaging with the tray engaging means which, in turn, are driven and thus moved by the tray discharge driving means and the tray storage driving means.

4. A module according to any of the preceding claims wherein the tray discharge driving means comprise two tray discharge drive chains laterally provided in relation to the platform.

5. A module according to the previous claim wherein the tray discharge driving means comprise two tray storage drive chains, each being aligned with one of the tray discharge drive chains.

6. A module according to claims 4 and 5 wherein the aligned tray discharge drive chains and tray storage drive chains are moved by means of a same driving axle.

7. A module according to each of claims 3-5 or each of claims 3-6 wherein the tray engaging means are configured to, when provided on the platform, extend from one of the tray discharge drive chains to the other of the tray discharge drive chains, the tray engaging means comprising two lateral projections, each of which engaging in one of the tray discharge drive chains, such that movement is transmitted from a tray discharge drive chain to the tray engaging means, and/or the tray engaging means comprising two lateral frontal projections, each of which engaging in one of the tray storage drive chains, such that movement is transmitted from a tray storage drive chain to the tray engaging means.

8. A module according to any of the preceding claims wherein the outlet is an open section provided after the platform in the discharge movement, wherein a living plant provided in a tray with a bottom opening falls through the open section.

9. A living plant feeding kit for automatically providing living plants for planting wherein it comprises a module according to any of the preceding claims and one or more trays, wherein one or more trays are provided on the platform.

10. A kit according to the previous claim wherein it comprises an even number of trays, each two trays being provided side by side on the platform, optionally the kit comprising 2.n trays, n being equal to 1, 2, 3, 4, 5, or 6,
optionally each tray having *l.m* individual cups, each cup being suitable to contain a living plant, I corresponding to a column of cups provided in the tray, on the platform and along the tray discharge direction of movement and being equal to 1, 2, 3, 4, 5, 6 and/or m corresponding to a line of cups provided in the tray, on the platform and along a direction perpendicular the tray discharge direction of movement and being equal to 5, 6, 7, 8, 9, 10, 11, 12, 14, 15, 16, 17, 18, 19 or 20, optionally each tray having 5x10 individual trays.

11. A living plant feeding system for automatically providing living plants for planting, the system comprising the module of any of the claims 1-8 or the kit of any of the claims 9-10
and a buffer module, wherein living plants provided on the outlet of the module are moved to the buffer module,
the buffer module comprising a closed circuit with a discharge hole, the closed circuit being configured such that a plurality of lined individual cups are providable in such closed circuit, each cup being suitable for containing a living plant,
wherein the closed circuit is further configured such that lined individual cups are sequentially moved along the circuit and, thus, a living plant provided in a cup with a bottom opening falls through the hole in the closed circuit.

12. A system according to the previous claim wherein the closed circuit comprises two substantially parallel straight sections and two curved sections, having a substantially elliptical shape, thereby being suitable for rounded cups, optionally the hole being provided substantially in the middle of a straight section.

13. A movable assembly for automatically planting a living plant, the movable assembly comprising i) a body, ii) base moving means coupled to the body and movable along a tray discharge direction of movement substantially parallel to soil provided below the movable assembly and iii) a planting module, the planting module being adapted to contain a living plant and being coupled to the body,
the movable assembly further comprising the living plant feeding module of any of the claims 1-8 or the living plant feeding kit of any of the claims 9-10 or the living plant feeding system of any of the claims 11-12, the living plant feeding module, kit or system being arranged to automatically provide living plants into the planting module, for subsequent planting.

14. A method for operating a living plant feeding module for automatically providing living plants for planting, the method comprising the steps of:
moving one or more trays containing living plants along a platform and from an inlet to an outlet, along a tray discharge direction,
discharging living plants from the tray through an outlet, optionally the outlet consisting of an open section and the tray having open bottoms below the living plants,
moving the one or more trays along a storage direction which at least has a component substantially perpendicular to the platform, optionally the storage direction being perpendicular, and the tray discharge movement, defining a storage movement.

15. A method according to the previous claim wherein the method is implemented by the module of any of the claims 1-8.
